# EUROPEAN PATENT SPECIFICATION

(11) **EP 2 572 087 B1**
(45) Date of publication and mention of the grant of the patent: **04.03.2015**
(21) Application number: 11784319.3
(22) Date of filing: 20.05.2011
(51) Int. Cl.: F02B 23/08, F02F 1/24, F02F 1/42

(54) **INTERNAL COMBUSTION ENGINE HAVING COMBUSTION CHAMBER WITH BLENDED HEMISPHERICAL AND PENT-ROOF PORTIONS**
VERBRENNUNGSMOTOR MIT EINER BRENNKAMMER MIT GEMISCHTEN HALBKUGELFÖRMIGEN UND PENT-DACH-TEILEN
MOTEUR À COMBUSTION INTERNE À CHAMBRE DE COMBUSTION À PARTIES HÉMISPHÉRIQUE ET MONOPENTE MÉLANGÉES

(30) Priority: 21.05.2010 US 347187 P
(43) Date of publication of application: 27.03.2013
(60) Divisional application: 14175424.2
(73) Proprietor: Cummins Intellectual Properties, Inc., Minneapolis, Minnesota 55432 (US)
(72) Inventor: PIERZ, Patrick M., Columbus, Indiana 47203 (US); LAPOINTE, Leon, Columbus, Indiana 47203 (US)
(74) Representative: Wunderlich, Rainer
(86) International application number: PCT/US2011/037331
(87) International publication number: WO 2011/146830

(56) References cited:
- DE-A1- 2 704 721
- FR-A1- 2 880 653
- JP-A- H10 317 974
- JP-A- 2001 164 939
- US-A- 3 094 977
- US-A- 6 109 234
- US-A1- 2007 056 556
- US-B1- 6 457 444
- US-B2- 6 789 516

## Description

### TECHNICAL FIELD

This disclosure relates to combustion chambers designed to enhance gas flow and combustion efficiency.

### BACKGROUND

Internal combustion engine designers continue to confront an ever more demanding set of governmental mandated emissions standards and performance standards such as fuel efficiency. The desirability of improved fuel efficiency is especially high in the spark ignition engine market given its size.

### SUMMARY

This disclosure provides an internal combustion engine, comprising an engine block, a cylinder head mounted on the engine block, wherein the cylinder head includes a combustion face forming a portion of a combustion chamber, and the combustion face includes a pent-roof portion and a hemispherical shaped portion. A first intake valve port formed in the cylinder head includes a first intake valve port opening formed in the pent-roof portion while a second intake valve port formed in the cylinder head includes a second intake valve port opening formed in the pent-roof portion. An exhaust valve port formed in the cylinder head includes an exhaust valve port opening formed in the hemispherical shaped portion.

The engine may further include a first spark plug mounting bore formed in the cylinder head and including a bore opening positioned on one side of the combustion face adjacent the first intake valve port opening and adjacent the exhaust valve port opening. The first spark plug mounting bore may be positioned at least partially between the first intake valve port opening and the exhaust valve port opening. A second spark plug mounting bore may be formed in the cylinder head and include a bore opening positioned on an opposite side of the combustion face from the first spark plug mounting bore adjacent the second intake valve port opening and adjacent the exhaust valve port opening. The combustion face may further include a transition portion connecting the pent-roof portion and the hemispherical portion, wherein the transition portion extends across an entire diameter of the combustion face. The transition portion may occupy no more than 20% of the combustion face. The engine may further include two spark plug mounting bores having respective openings formed within at least one of the hemispherical portion and said transition portion. The two spark bore openings may each be positioned in both the hemispherical portion and the transition portion. At least 70% of each of the first intake valve port opening and the second intake valve port opening may be positioned in the pent-roof portion. At least 70% of the exhaust valve port opening may be positioned in the hemispherical portion.

The disclosure also provides an internal combustion engine, comprising an engine block, a cylinder head mounted on the engine block, wherein the cylinder head includes a combustion face forming a portion of a combustion chamber. The combustion face includes a pent-roof portion, a hemispherical shaped portion, and a transition portion connecting the pent-roof portion and the hemispherical portion. A first intake valve port formed in the cylinder head includes a first intake valve port opening formed in the pent-roof portion, while an exhaust valve port formed in the cylinder head includes an exhaust valve port opening formed in the hemispherical shaped portion. A spark plug mounting bore formed in the cylinder head includes a bore opening formed in at least one of the hemispherical shaped portion and the transition portion.

Advantages and features of the embodiments of this disclosure will become more apparent from the following detailed description of exemplary embodiments when viewed in conjunction with the accompanying drawings.

DE 2704721 A1 describes a combustion engine with two spark plugs in each combustion chamber wherein said engine is equipped with an exhaust gas recycling system. US 3094977 A describes cylinder head assemblies for spark ignition combustion engines. FR2880653 A1 describes a combustion engine for a vehicle with at least one cylinder and two conduits per cylinder for admission of air. JP 2001164939 A describes a combustion chamber of an engine to improve combustion efficiency by reducing the difference between flame propagating distances to respective peripheral parts of a combustion chamber.

### BRIEF DESCRIPTION OF THE DRAWINGS

FIG. 1 is a bottom view of an exemplary embodiment of the cylinder head including the combustion face of the present disclosure;
FIG. 2 is a cross-sectional view of the cylinder head taken along plane 3-3 in FIG. 1;

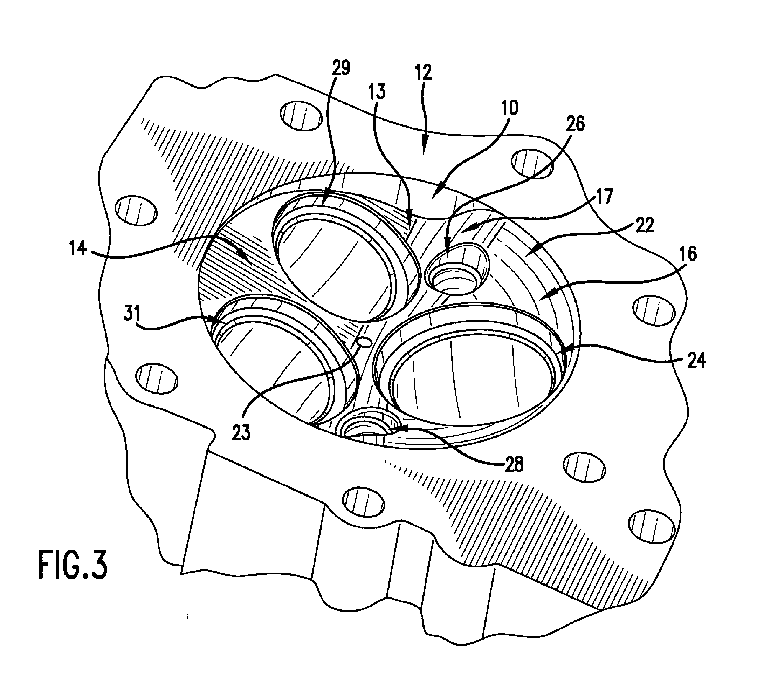

FIG. 3 is a perspective view of the cylinder head including the combustion face of FIG. 1 showing the shape of the pent-roof, transition, and hemispherical portions without the intake and exhaust valves;

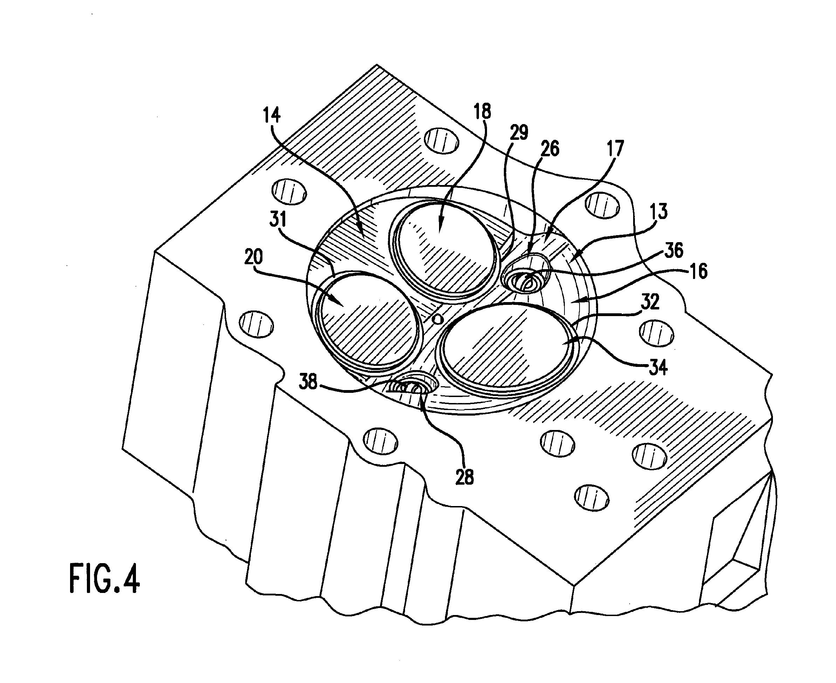

FIG. 4 is a perspective view of the cylinder head including the combustion face of FIG. 1 showing the shape of the pent-roof, transition, and hemispherical portions with the intake and exhaust valves; and

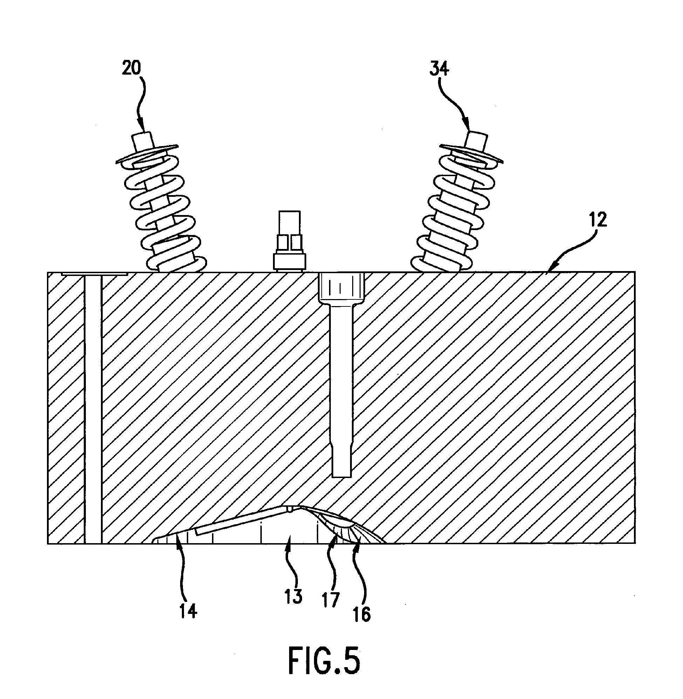

FIG. 5 is a cross-sectional view of the cylinder head including the combustion face taken along plane 5-5 in FIG. 1.

### DETAILED DESCRIPTION

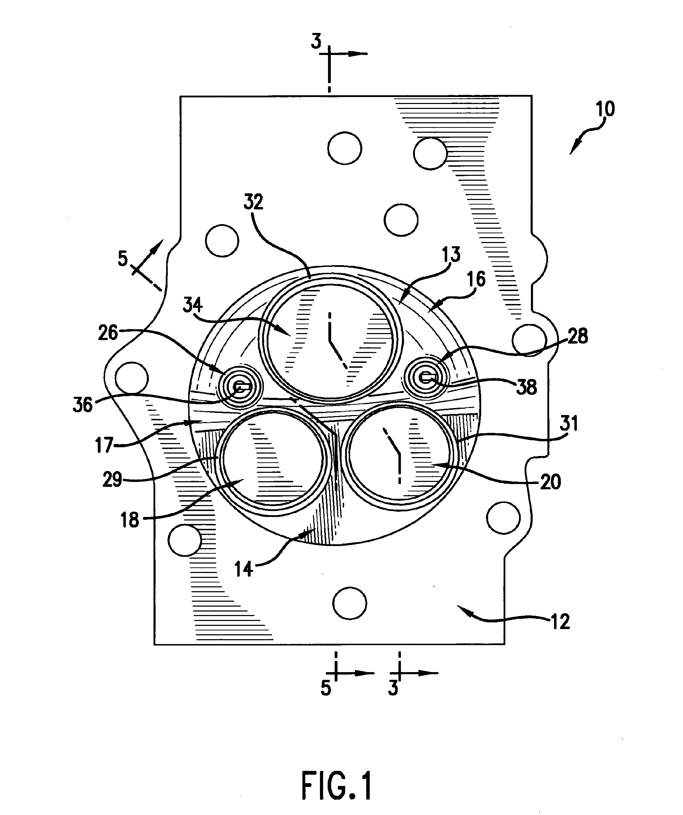

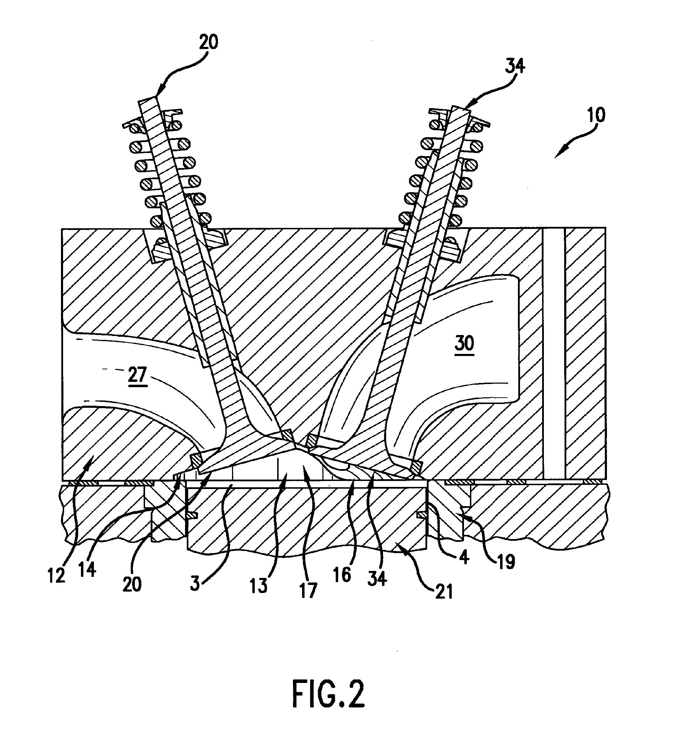

Embodiments of the present disclosure significantly improve the fuel efficiency of spark ignition engines by providing improved porting and enhanced spark ignition. Referring to the FIGS. 1 and 2, an exemplary embodiment of an engine 10 of the present disclosure includes a cylinder or engine block, only a small portion of which is illustrated at 2 (FIG. 2), and at least one combustion chamber 3. Of course, the engine may contain a plurality of combustion chambers, typically four to eight, which may be arranged in a line or in a "V" configuration. Each combustion chamber 3 is formed at one end of a cylinder cavity 4 which may be formed directly in engine block 2. The cylinder cavity 4 may be arranged to receive a removable cylinder liner 19 which is only partially shown in FIG. 2.

One end of each cylinder cavity 4 is closed by an engine cylinder head 12 having a combustion face 13 of the present disclosure associated with each cavity 4 as discussed more fully herein below. Engine 10 further includes a respective piston 21 mounted in a corresponding liner 19 associated with each combustion chamber. Although only a top portion of piston 21 is shown in FIG. 2, piston 21 may be any type of piston. For example, piston 21 may be an articulated piston or a single piece piston design. The upper surface or top face of piston 21 cooperates with head 12 and the portion of cylinder liner 19 extending between head 12 and piston 21 to define combustion chamber 3. Although not specifically illustrated, piston 21 is connected through a connecting rod to a crankshaft of the internal combustion engine which causes the piston to reciprocate along a rectilinear path within cylinder liner 19 as the engine crankshaft rotates. FIG. 2 illustrates the position of piston 21 in a top dead center (TDC) position achieved when the crankshaft is positioned to move the piston to the furthest most position away from the rotational axis of the crankshaft. In the conventional manner, the piston moves from the top dead center position to a bottom dead center (BDC) position when advancing through intake and power strokes.

Engine 10 is a four-cycle spark ignition engine employing premixed fuel and air. A pair of intake ports or passages 25, 27 having respective intake port openings 29, 31 formed in combustion face 13 selectively direct intake air and fuel into combustion chamber 3 by means of a pair of intake valves 18, 20. Similarly, an exhaust port or passage 30 having an exhaust port opening 32 formed in combustion face 13 selectively directs exhaust gas from combustion chamber 3 by means of an exhaust valve 34. The opening and closing of valves 25, 27 and 34 may be achieved by a mechanical cam or hydraulic actuation system or other motive system in carefully controlled time sequence with the reciprocal movement of piston 21. The amount of charge air that is caused to enter the combustion chambers may be increased by providing a pressure boost in the engine's intake manifold. This pressure boost may be provided, for example, by a turbocharger, not illustrated, driven by a turbine powered by the engine's exhaust, or maybe driven by the engine's crankshaft.

Each combustion face 13 of cylinder head 12 is formed with a particular combination of shaped surfaces or portions, and intake and exhaust port openings sized and positioned on those portions of combustion face 13 in a particular location, resulting in improved flow and enhanced combustion efficiency. The combustion face 13 preferably also includes one or more spark plugs positioned in a predetermined location to optimize combustion. Specifically, combustion face 13 includes a pent-roof section or portion 14 and a hemispherical, i.e. semispherical, shaped section or portion 16 to optimize the function of the valves and the spark plug(s). In addition, in the exemplary embodiment, combustion face 13 further includes a blended or transition section or portion 17 connecting pent-roof portion 14 and hemispherical portion 16. Transition portion 17 is designed to occupy as little space/area, i.e. no more than 20%, of combustion face 13 as possible to smoothly blend the two geometries (pent-roof and hemispherical), while pent-roof portion 14 and hemispherical portion 16 may occupy approximately equal amounts of the remainder of the combustion face or hemispherical portion 16 may occupy slightly more combustion face area than pent-roof portion 14. A pressure transducer may be inserted into a central passage 23.

In the exemplary embodiment, the two intake port openings 29, 31 are located on the pent-roof portion 14 and thus are positioned at an acute angle relative to the lower planar surface of cylinder head 12 (i.e. angled relative to the upper surface of the engine block 2/liner 19 (FIG. 2). Specifically, a substantial portion, i.e., at least 70%, of each intake valve port opening 29, 31 is located in the pent-roof portion while a smaller remaining portion, i.e., less than 30%, is located in transition portion 17. The exhaust valve port opening 32, also positioned at an angle, is located on the hemispherical shaped side or portion 16. Specifically, a substantial portion, i.e., at least 70%, of exhaust valve port opening 32 is located in the hemispherical portion 16 while a smaller remaining portion, i.e., less than 30%, is located in transition portion 17. The intake valves, and the exhaust valve, are each positioned in the respective ports and openings. A first spark plug mounting bore and opening 26, for receiving a spark plug 36, is positioned in the open/available surface area of combustion face 13 on one side of face 13 and exhaust valve opening 32 adjacent intake valve port opening 29. A second spark plug mounting bore and opening 28, for receiving a spark plug 38, is positioned adjacent intake valve port opening 31 on an opposite side of both the combustion face 13 and exhaust valve port opening 32 from bore opening 26. In the exemplary embodiment, the plug bore openings 26, 28 are partially positioned in both the transition and hemispherical portions in the space between a respective intake valve port opening and the exhaust valve port opening. The spark plug bores are located to maintain a minimum design distance between valve openings to achieve a sufficient wall thickness providing the strength necessary to prevent a structural failure while optimizing combustion ignition and efficiency.

A goal of this cylinder head is to maximize the efficiency of the intake and exhaust ports. By angling the port openings and respective valves relative to the combustion face 13 (FIG. 1), it is possible to increase the size of the intake ports, openings and valves while at the same time provide more room for the spark plug boss or bosses. Applicant has determined that a three valve design with dual spark plugs produces a very efficient package with the two intake valves/ports/openings positioned in the pent-roof shaped face or portion 14 and the single exhaust valve/port/opening positioned in hemispherical shaped face or portion 16. This combustion chamber arrangement allows for maximum valve area (maximizing the size of the valve port openings) with minimal flow interference (also known as masking) from the head surface that surrounds the openings and valves. The improved flow afforded by this new configuration lowers the pumping work required and improves the fuel consumption of the engine. Another advantage of this design is that it allows for the placement of two spark plugs in the open/available surface area on opposite sides of the combustion chamber and strategically positioned on opposite sides of the exhaust valve opening, with each plug bore opening being positioned adjacent a respective one intake valve. Each spark plug bore opening may be positioned at least partially between the exhaust valve and a respective intake valve opening. This placement of multiple plugs has been shown to promote rapid and efficient combustion thereby reducing the combustion duration, also improving fuel economy.

The number, position, and arrangement of the valves, in combination with the shape of the combustion chamber portions, allows for efficient placement/positioning of one or more spark plugs in the remaining open space/area of the cylinder head forming the combustion chamber. In this manner, the system of the present disclosure packages the intakes valves, spark plug(s), and exhaust valves to optimize the area of the cylinder face 13 forming the combustion chamber.

Thus, embodiments described herein include the use of a blended pent-roof and hemispherical combustion chamber shape with two intake valves, a single exhaust valve located on the respective sides along with at least one, but preferably two, spark plugs. This combination yields significant improvement in flow and combustion efficiency relative to the industry standard flat face combustion deck.

While various embodiments of the disclosure have been shown and described, it is understood that these embodiments are not limited thereto. The embodiments may be changed, modified and further applied by those skilled in the art. Therefore, these embodiments are not limited to the detail shown and described previously, but also include all such changes and modifications.

## Claims

1. An internal combustion engine, comprising:
an engine block (2);
a cylinder head (12) mounted on said engine block (2), said cylinder head (12) including a combustion face (13) forming a portion of a combustion chamber (3);
a first intake valve port formed in said cylinder head (12), said first intake valve port including a first intake valve port opening (29);
a second intake valve port formed in said cylinder head (12), said second intake valve port including a second intake valve port opening (31); and
an exhaust valve port formed in said cylinder head (12), said exhaust valve port including an exhaust valve port opening (32),
**characterized in that**
said combustion face (13) includes a pent-roof portion (14) and a hemispherical shaped portion (16),
said first intake valve port opening (29) is formed in said pent-roof portion (16),
said second intake valve port opening (31) is formed in said pent-roof portion (16),
and said exhaust valve port opening (32) is formed in said hemispherical shaped portion (16).

2. The engine of claim 1, further including a first spark plug mounting bore formed in said cylinder head (12) and including a bore opening (26) positioned on one side of the combustion face (13) adjacent the first intake valve port opening (29) and adjacent the exhaust valve port opening (23).

3. The engine of claim 2, wherein said first spark plug mounting bore is positioned at least partially between said first intake valve port opening (29) and said exhaust valve port opening (32).

4. The engine of claim 2, further including a second spark plug mounting bore formed in said cylinder head (12) and including a bore opening (28) positioned on an opposite side of said combustion face (13) from said first spark plug mounting bore adjacent said second intake valve port opening (31) and adjacent said exhaust valve port opening (32).

5. The engine of claim 1, wherein said combustion face (13) further includes a transition portion (17) connecting said pent-roof portion (14) and said hemispherical portion (16), said transition portion (17) extending across an entire diameter of said combustion face (13).

6. The engine of claim 5, wherein said transition portion (17) occupies no more than 20% of said combustion face (13).

7. The engine of claim 1, further including two spark plug mounting bores having respective openings formed within at least one of said hemispherical portion (16) and said transition portion (17).

8. The engine of claim 7, wherein said two spark bore openings are each positioned in both said hemispherical portion and said transition portion (17).

9. The engine of claim 1, wherein at least 70% of each of said first intake valve port opening (29) and said second intake valve port opening (31) is positioned in said pent-roof portion.

10. The engine of claim 9, wherein at least 70% of said exhaust valve port opening (32) is positioned in said hemispherical portion (16).

## Patentansprüche

1. Verbrennungsmotor mit:
einem Motorblock (2);
einem Zylinderkopf (12), der an dem Motorblock (2) gelagert ist, wobei der Zylinderkopf (12) eine Verbrennungsseite (13) aufweist, die einen Teil einer Verbrennungskammer (3) bildet;
einem ersten Einlassventilanschluss, der in dem Zylinderkopf (12) gebildet ist, wobei der erste Einlassventilanschluss eine erste Einlassventilanschlussöffnung (29) umfasst;
einem zweiten Einlassventilanschluss, der in dem Zylinderkopf (12) gebildet ist, wobei der zweite Einlassventilanschluss eine zweite Einlassventilanschlussöffnung (31) umfasst; und
einem Abgasventilanschluss, der in dem Zylinderkopf (12) gebildet ist, wobei der Abgasventilanschluss eine Abgasventilanschlussöffnung (32) umfasst,
**dadurch gekennzeichnet,**
**dass** die Verbrennungsseite (13) einen pultdachförmigen Bereich (14) und einen hemisphärisch geformten Bereich (16) aufweist,
**dass** die erste Einlassventilanschlussöffnung (29) in dem pultdachförmigen Bereich (14) gebildet ist,
**dass** die zweite Einlassventilanschlussöffnung (31) in dem pultdachförmigen Bereich (14) gebildet ist, und
**dass** die Abgasventilanschlussöffnung (32) in dem hemisphärisch geformten Bereich (16) gebildet ist.

2. Motor nach Anspruch 1,
welcher außerdem eine erste Zündkerzenhalterungsbohrung aufweist, die in dem Zylinderkopf (12) gebildet ist und eine Bohrungsöffnung (26) umfasst, welche an einer Seite der Verbrennungsseite (13) neben der ersten Einlassventilanschlussöffnung 29 und neben der Abgasventilanschlussöffnung (23) positioniert ist.

3. Motor nach Anspruch 2,
wobei die erste Zündkerzenhalterungsbohrung zumindest teilweise zwischen der ersten Einlassventilanschlussöffnung (29) und der Abgasventilanschlussöffnung (32) positioniert ist.

4. Motor nach Anspruch 2,
welcher außerdem eine zweite Zündkerzenhalterungsbohrung aufweist, die in dem Zylinderkopf (12) gebildet ist und eine Bohrungsöffnung (28) enthält, die an einer gegenüberliegenden Seite der Verbrennungsseite (13) von der ersten Zündkerzenhalterungsbohrung neben der zweiten Einlassventilanschlussöffnung (31) und neben der Abgasventilanschlussöffnung (32) positioniert ist.

5. Motor nach Anspruch 1,
wobei die Verbrennungsseite (13) außerdem einen Übergangsbereich (17) aufweist, welcher dem pultdachförmigen Bereich (14) und dem hemisphärischen Bereich (16) verbindet, wobei der Übergangsbereich (17) sich über einen gesamten Durchmesser der Verbrennungsseite (13) erstreckt.

6. Motor nach Anspruch 5,
wobei der Übergangsbereich (17) nicht mehr als 20 % der Verbrennungsseite (13) belegt.

7. Motor nach Anspruch 1,
welcher außerdem zwei Zündkerzenhalterungsbohrungen aufweist, welche jeweils eine Öffnung haben, die innerhalb von mindestens einem aus dem hemisphärischen Bereich (16) und dem Übergangsbereich (17) gebildet ist.

8. Motor nach Anspruch 7,
wobei die zwei Zündkerzenbohrungsöffnungen jeweils in sowohl dem hemisphärischen Bereich als auch dem Übergangsbereich (17) angeordnet sind.

9. Motor nach Anspruch 1,
wobei mindestens 70 % von sowohl der ersten Einlassventilanschlussöffnung (29) als auch der zweiten Einlassventilanschlussöffnung (31) in dem pultdachförmigen Bereich angeordnet sind.

10. Motor nach Anspruch 9,
wobei mindestens 70 % der Abgasventilanschlussöffnung (32) in dem hemisphärischen Bereich (16) angeordnet sind.

## Revendications

1. Un moteur à combustion interne, comprenant :
un bloc moteur (2),
une culasse (12) montée sur ledit bloc moteur (2), ladite culasse (12) incluant une face de combustion (13) formant une partie d'une chambre à combustion (3),
un premier raccordement de soupape d'admission formé dans ladite culasse (12), ledit premier raccordement de soupape d'admission incluant un premier orifice de raccordement de soupape d'admission (29),
un deuxième raccordement de soupape d'admission formé dans ladite culasse (12), ledit deuxième raccordement de soupape d'admission incluant un deuxième orifice de raccordement de soupape d'admission (31), et
un raccordement de soupape d'échappement formé dans ladite culasse (12), ledit raccordement de soupape d'échappement incluant un orifice de raccordement de soupape d'échappement (32),
**caractérisé en ce que**
ladite face de combustion (13) inclut une partie en forme de toit à une pente (14) et une partie de forme hémisphérique (16),
ledit premier orifice de raccordement de soupape d'admission (29) est formé dans ladite partie en forme de toit à une pente (16),
ledit deuxième orifice de raccordement de soupape d'admission (31) est formé dans ladite partie en forme de toit à une pente (16),
et ledit orifice de raccordement de soupape d'échappement (32) est formé dans ladite partie de forme hémisphérique (16).

2. Le moteur selon la revendication 1, incluant également un premier alésage de fixation de bougies d'allumage formé dans ladite culasse (12) et incluant un orifice de perçage (26) positionné sur un côté de la face de combustion (13) adjacent au premier orifice de raccordement de soupape d'admission (29) et adjacent à l'orifice de raccordement de soupape d'échappement (23).

3. Le moteur selon la revendication 2, ledit premier alésage de fixation de bougies d'allumage étant positionné au moins en partie entre ledit premier orifice de raccordement de soupape d'admission (29) et ledit orifice de raccordement de soupape d'échappement (32).

4. Le moteur selon la revendication 2, incluant également un deuxième alésage de fixation de bougies d'allumage formé dans ladite culasse (12) et incluant un orifice de perçage (28) positionné sur un côté opposé de ladite face de combustion (13) dudit premier alésage de fixation de bougies d'allumage adjacent audit deuxième orifice de raccordement de soupape d'admission (31) et adjacent audit orifice de raccordement de soupape d'échappement (32).

5. Le moteur selon la revendication 1, ladite face de combustion (13) incluant également une partie de transition (17) liant ladite partie en forme de toit à une pente (14) et ladite partie hémisphérique (16), ladite partie de transition (17) s'étendant sur un diamètre entier de ladite face de combustion (13).

6. Le moteur selon la revendication 5, ladite partie de transition (17) n'occupant pas plus de 20 % de ladite face de combustion (13).

7. Le moteur selon la revendication 1, incluant également deux alésages de fixation de bougies d'allumage ayant chacun un orifice formé dans au moins une des deux parties suivantes : ladite partie hémisphérique (16) et ladite partie de transition (17).

8. Le moteur selon la revendication 7, les deux orifices de fixation de bougies étant chacun positionnés dans ladite partie hémisphérique et ladite partie de transition (17).

9. Le moteur selon la revendication 1, au moins 70 % dudit premier orifice de raccordement de soupape d'admission (29) et 70 % dudit second orifice de raccordement de soupape d'amission (31) étant positionnés dans ladite partie en forme de toit à une pente.

10. Le moteur de la revendication 9, au moins 70 % dudit orifice de raccordement de soupape d'échappement (32) étant positionnés dans ladite forme hémisphérique (16).
